# EUROPÄISCHE PATENTSCHRIFT

(11) **EP 3 655 225 B1**
(45) Veröffentlichungstag und Bekanntmachung des Hinweises auf die Patenterteilung: **17.03.2021**
(21) Anmeldenummer: 18752144.8
(22) Anmeldetag: 07.08.2018
(51) Int. Cl.: B29C 45/64, B29C 45/17, B29C 45/66

(54) **FORMSCHLIESSEINHEIT FÜR EINE SPRITZGIESSMASCHINE**
MOLD CLOSING UNIT FOR AN INJECTION MOLDING MACHINE
UNITE DE FERMETURE DE MOULE POUR MACHINE DE MOULAGE PAR INJECTION

(30) Priorität: 07.08.2017 DE 102017117934
(43) Veröffentlichungstag der Anmeldung: 27.05.2020
(73) Patentinhaber: Arburg GmbH + Co. KG, 72290 Lossburg (DE)
(72) Erfinder: DUFFNER, Eberhard, 72181 Starzach (DE); BLETSCHER, Rainer, 72270 Baiersbronn (DE)
(74) Vertreter: RPK Patentanwälte Reinhardt, Pohlmann und Kaufmann Partnerschaft mbB
(86) Internationale Anmeldenummer: PCT/EP2018/071338
(87) Internationale Veröffentlichungsnummer: WO 2019/030203

(56) Entgegenhaltungen:
- AT-U1- 6 788
- DE-T2- 60 214 802
- DE-U1- 20 317 114
- US-A1- 2006 263 471

## Beschreibung

Die Erfindung betrifft eine Formschließeinheit für eine Spritzgießmaschine zur Verarbeitung von Kunststoffen und anderer plastifizierbarer Massen, wie keramische oder pulverige Massen nach dem Oberbegriff des Anspruches 1.

Im Rahmen dieser Erfindung wird unter einem Zahnstangenantrieb ein Antrieb verstanden, der wenigstens eine Zahnstange und wenigstens ein mit der wenigstens einen Zahnstange zusammenarbeitendes Zahnrad oder Ritzel aufweist, wobei ein Antriebsmotor wenigstens ein Zahnrad oder Ritzel antreibt. Grundsätzlich können damit sowohl ein Motor z.B. mit zwei Zahnrädern, die mit einer durchgehenden Welle verbunden sind, in zwei Zahnstangen eingreifen, als auch mehrere, z.B. vier Motoren, denen jeweils ein vom Motor angetriebenes Zahnrad zugeordnet ist, zum Antrieb in zwei Zahnstangen eingreifen.

Im Rahmen dieser Erfindung wird unter einem "Formschluss" der Zustand einer Spritzgießmaschine verstanden, in dem bei auf den Formaufspannplatten angebrachter, im Formspannraum aufgenommener Spritzgießform die Teile der Spritzgießform aneinandergrenzen, was dem bei Vorhandensein einer Spritzgießform geringsten Abstand zwischen den Formaufspannplatten entspricht. In diesem Zustand wird regelmäßig die Schließkraft aufgebracht und das plastifizierte Material in den Formhohlraum der Spritzgießform eingespritzt.

Um die Formschließeinheit einer Spritzgießmaschine nach einem Spritzgussvorgang zu öffnen beziehungsweise vor einem Spritzgussvorgang zu schließen, muss wenigstens eine der Formaufspannplatten bewegt werden. Um die Totzeit der Spritzgießmaschine so klein wie möglich zu halten und somit ein ausreichendes Maß an Produktivität zu erhalten, ist ein schnelles Öffnen und Schließen der Formschließeinheit erwünscht. Da Formaufspannplatten jedoch je nach Größe der Spritzgießmaschine ein großes Gewicht aufweisen, müssen diese sehr vorsichtig und sorgfältig verfahren werden, da sonst ein paralleler Formschluss der beiden Formaufspannplatten beim Formschluss der Formschließeinheit nicht gewährleistet ist und daraus ein schlechtes Spritzgussergebnis resultieren sowie eine Beschädigung der Spritzgießmaschine erfolgen kann. Häufig erfolgt die Einleitung der Schließ- und Öffnungskräfte zudem über diagonal angeordnete Hydraulikzylinder, was eine eingeschränkte Zugänglichkeit des Formaufspannbereichs zur Folge hat. Weiterhin kann es aufgrund des großen Gewichts der Formaufspannplatten zu Kippmomenten der beweglichen Formaufspannplatte kommen, was sich darin äußern kann, dass die beiden Formaufspannplatten nicht parallel sondern verkippt schließen.

Aus der dem Oberbegriff des Anspruchs 1 zugrunde liegenden US 2006/0263471 A1 ist eine für Spritzgießmaschinen geeignete Formschließeinheit bekannt, die eine stationäre Formaufspannplatte und eine auf einem Maschinenbett beweglich dazu angeordnete bewegliche Formaufspannplatte aufweist. Als Antriebsmechanismus zum Bewegen der beweglichen Formaufspannplatte zum Öffnen und Schließen der Formschließeinheit ist ein Zahnstangenantrieb vorgesehen. Zwei Zahnstangen sind dazu fest mit dem Maschinenbett verbunden, der Antriebsmotor für den Zahnstangenantrieb ist fest mit dem Schlitten verbunden, auf dem die bewegliche Formaufspannplatte angeordnet ist, sodass sich bei einer Bewegung der Formaufspannplatte der Antriebsmotor synchron mit der beweglichen Formaufspannplatte in dieselbe Richtung bewegt.

Aus der DE 203 17 114 U1 ist eine Schließeinheit für eine Spritzgießmaschine mit einer beweglichen Werkzeugaufspannplatte und einer stationären Werkzeugaufspannplatte bekannt. Die bewegliche Werkzeugaufspannplatte ist an einer Führung geführt. Über einen Antrieb wird die bewegliche Werkzeugaufspannplatte bewegt. Die Führung ist als Linearführung ausgebildet, die ein Verkippen der Werkzeugaufspannplatte aus ihrer vertikalen Position verhindert. Der Antrieb ist unterhalb der beweglichen Werkzeugaufspannplatte angeordnet.

Aus der EP 0 427 438 B1 ist eine Antriebsanordnung für eine Spritzgießmaschine bekannt, an der an mindestens einer der Formplatten eine Antriebseinheit in Form einer Linearantriebseinheit mit mindestens einem Motor, mindestens einem vom Motor angetriebenen Zahnradsatz sowie einer Zahnstange vorgesehen ist. Die Zahnstange wird mithilfe des Motors und des Zahnradsatzes angetrieben, wobei die Zahnräder und mindestens ein Teil der Zahnstange innerhalb eines Gehäuses angeordnet sind.

Aus der WO 2016/202509 A1 ist eine Kniehebelschließeinheit für eine Spritzgießmaschine bekannt. Ein verfahrbarer Kreuzkopf steht über einen Kniehebel mit einer beweglichen Formaufspannplatte in Wirkverbindung. Mithilfe von elektrischen Antrieben wie einem Zahnstangenantrieb wird der Kreuzkopf verfahren. Ferner ist zusätzlich zu den elektrischen Antrieben mindestens ein hydraulischer Antrieb vorgesehen, der mit dem Kreuzkopf in Wirkverbindung steht und mit dem ein Verfahren des Kreuzkopfes entlang der Maschinenlängsachse möglich ist, wobei der hydraulische Antrieb ein Kolbenzylindersystem aufweist. Zum Verfahren der beweglichen Formaufspannplatte kann der elektrische und/oder der hydraulische Antrieb verwendet werden.

Eine Spritzgießmaschine mit einer Holmzugvorrichtung ist aus der EP 2 228 192 A1 bekannt. Die Holmzugvorrichtung weist einen elektromotorischen Antrieb wie z.B. einen Zahnstangenantrieb auf, der über eine Getriebeeinrichtung mit mindestens einem ziehbaren Holm gekoppelt ist, sodass eine bewegliche Formaufspannplatte bei der Werkzeugöffnungs- und Schließbewegung verschiebbar geführt ist.

Eine Spritzgießmaschine mit einer Spritzeinheit und einer Schließeinheit ist in der DE 10 2008 051 300 B3 offenbart. Die Spritzeinheit ist dabei ortsfest und die Schließeinheit relativ zur Spritzeinheit verfahrbar. Hierbei wird die komplette Schließeinheit relativ zur Spritzeinheit verfahren, was für Anwendungsfälle vorteilhat ist, in denen eine vergleichsweise große Spritzeinheit mit einer vergleichsweisen kleinen Schließeinheit zusammenwirkt. Innerhalb der Schließeinheit wird eine verfahrbare Formaufspannplatte über einen Zahnstangenantrieb zyklisch bewegt, indem ein angetriebenes Zahnrad in eine an der verfahrbaren Formaufspannplatte angebrachte Zahnstange eingreift.

Aus der DE 102 29 060 B4 ist eine Schließeinrichtung für eine Spritzgießmaschine bekannt, wobei die bewegliche Werkzeughälfte des Spritzgießwerkzeugs (Spritzgießform) mit einem Zahnstangenantrieb an die zweite feststehende Werkzeughälfte herangefahren wird, wobei bei einem bestimmten Abstand zwischen beweglicher Werkzeughälfte und feststehender Werkzeughälfte ein magnetisches Feld innerhalb der festen Werkzeughälfte eingeschaltet wird und so einen Magneten, welcher in der beweglichen Werkzeughälfte angebracht ist, durch eine magnetische Kraft anzieht und so die beiden Werkzeughälften komplett verschließt. Der Zahnstangenantrieb umfasst eine am Maschinenbett montierte Zahnstange und einen mit der beweglichen Werkzeughälfte verfahrbaren Antriebsmotor für ein in die Zahnstange eingreifendes Zahnrad.

Aus der EP 1 277 559 B1 ist eine Formschließeinheit für eine Kunststoffspritzgießmaschine bekannt, bei der an den vier Kraftübertragungsholmen Gewinde für Schraubenmuttern vorgesehen sind, die über einen Riemenantrieb gemeinsam zur Aufbringung der Schließkraft betätigt werden. Um die Formhälften der Spritzgießform in und außer Formschluss zu überführen, werden die Schraubenmuttern vom Gewinde entkoppelt, so dass eine Axialbewegung des beweglichen Formträgers z.B. mittels eines Zahnstangensystems (Fig. 11, 12) möglich ist. Der das mit der Zahnstange zusammenwirkende Zahnrad antreibende Elektromotor ist am beweglichen Formträger befestigt. Für das Entkoppeln und Einkoppeln der Schraubenmuttern sind zusätzliche Mechanismen und damit auch Betätigungszeiten erforderlich.

Aus der DE 295 16 559 U1 ist eine Spritzgießmaschine mit einem zwischen mehreren Zahnstangen aufgenommenen Motorgehäuse bekannt, in dem Motoren für eine Formschließeinrichtung aufgenommen sind. Das Motorgehäuse wird gemeinsam mit dem beweglichen Formträger bewegt, indem die Motoren Zahnräder antreiben, die mit den an Kraftübertragungselementen angebrachten Zahnstangen kämen.

Aus der DE 44 03 079 C1 ist eine Formschließeinrichtung für eine Spritzgießmaschine mit auf Führungen gelagerten Rollenumlaufschuhen für einen beweglichen Formträger bekannt. Führungen und beweglicher Formträger können mittels einer Einstelleinrichtung aufeinander ausgerichtet werden.

Bei allen Lösungen im Stand der Technik wird eine bewegliche Formaufspannplatte zum Öffnen bzw. zum Schließen der Formschließeinheit an eine stationäre Formaufspannplatte gefahren. In aller Regel weisen Formaufspannplatten eine große Masse auf, welche die Antriebe stark beanspruchen. Bei Bewegung der Formaufspannplatten können Kippmomente beim Betrieb der Spritzgießmaschine, insbesondere beim Verfahren der Formaufspannplatten auftreten. Durch die resultierenden Kräfte sind ein paralleler Formschluss sowie ein paralleles Bewegen der Formaufspannplatten beim Schließen/Öffnen der Formschließeinheit nicht gewährleistet. Weiterhin können durch die Kippmomente Beschädigungen an der Formschließeinheit, den Formaufspannplatten, dem Antrieb sowie der gesamten Spritzgießmaschine resultieren Dies ist umso mehr der Fall, wenn an Stelle der am Markt üblichen diagonal und damit meist symmetrisch angeordneten Hydraulikzylinder oder Spindelsysteme asymmetrisch z.B. im Maschinengestell angeordnete Antriebssysteme verwendet werden, die einen leichteren Zugang zum Formspannraum gewährleisten.

Ausgehend von diesem Stand der Technik liegt der vorliegenden Erfindung die Aufgabe zugrunde, auftretende Kippmomente zu vermindern und einen sicheren Betrieb der Formschließeinheit zu gewährleisten.

Dies wird mit einer Formschließeinheit gemäß den Merkmalen des Patentanspruches 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit für eine Spritzgießmaschine zur Verarbeitung von Kunststoffen und anderen plastifizierbaren Massen wie keramischen und pulverförmigen Massen weist wenigstens ein Maschinenbett, wenigstens eine stationäre Formaufspannplatte und wenigstens eine gegenüber der stationären Formaufspannplatte bewegliche Formaufspannplatte auf. Die bewegliche Formaufspannplatte ist auf einem Schlitten mit Führungsschuhen angebracht, welcher entlang wenigstens einer am Maschinenbett angebrachten Führung bewegbar ist. Ein Antriebsmechanismus zum Verschieben der beweglichen Formaufspannplatte relativ zum stationären Formaufspannplatte in und außer Formschluss einer in einem Formspannraum anordenbaren Spritzgießform und zum Öffnen/Schließen der Formschließeinheit weist wenigstens einen von wenigstens einem Antriebsmotor angetriebenen Zahnstangenantrieb mit wenigstens einem Zahnrad und wenigstens einer mit dem Zahnrad in Wirkverbindung stehenden Zahnstange auf. Wenigstens zwei Zahnstangen sind fest mit dem Maschinenbett sowie der Antriebsmotor fest mit dem Schlitten verbunden, welcher sich bei einer Bewegung der beweglichen Formaufspannplatte synchron mit der beweglichen Formaufspannplatte in dieselbe Richtung bewegt. Prinzipiell denkbar ist auch, dass der Antriebsmotor direkt mit der beweglichen Formaufspannplatte fest verbunden ist, wie auch eine feste Verbindung mit dem Schlitten und der beweglichen Formaufspannplatte. Für einen symmetrischen Antrieb der beweglichen Formaufspannplatte sind wenigstens zwei Zahnstangen vorgesehen, so dass sich bereits dadurch eine parallele Verfahrbewegung der beweglichen Formaufspannplatte ergibt. Weiterhin ergeben sich aufgrund der Tatsache, dass die Führung sowie die Zahnstangen an einem Element verbunden sind, Synergieeffekte bezüglich der Stabilität, was sich positiv auf einen parallelen Formschluss der Formaufspannplatten auswirkt. Durch die Verwendung von wenigstens zwei Zahnstangenantrieben ist es möglich, die Kippmomente und die damit verbundenen Kippkräfte durch eine ungleichmäßige Gewichtsverteilung der beweglichen Formaufspannplatte in Bezug auf die Führungselemente zu vermindern.

Beim Beschleunigen und/oder Abbremsen der meist schweren Formaufspannplatten kann es aufgrund der Massenträgheit zu Kippkräften kommen, welche sich negativ auf die Sicherheit und den Formschluss des Spritzgießprozesses auswirken können. Für eine sichere Bewegung der beweglichen Formaufspannplatte weist der Schlitten wenigstens einen Lastsensor zur Erfassung von Kippkräften auf. Prinzipiell denkbar ist auch, dass mehrere Lastsensoren an verschiedenen Stellen des Schlittens und/oder der beweglichen Formaufspannplatte angebracht sind, sodass die Kippkräfte vorteilhaft mit einer höheren Genauigkeit über den gesamten Schlitten bzw. über die gesamte bewegliche Formaufspannplatte erfasst werden. Unter Verwendung der von dem wenigstens einen Lastsensor erfassten Kräfte kann mit einer intelligenten Antriebsmotoransteuerung der Kippneigung aufgrund der Trägheit infolge der dynamischen Bewegung entgegengewirkt werden. Da durch eine ungleichmäßige Lastenverteilung der beweglichen Formaufspannplatte sowie aus Masseträgheiten als Einflüsse der dynamischen Bewegung Kippkräfte entstehen können, steht der Lastsensor mit wenigstens einer Regeleinheit in Verbindung, welche den Antriebsmechanismus je nach Kippkraft regelt und so die Kippkräfte ausgleicht.

Zur Erzielung eines weitestgehend ungehinderten Zugangs zum Formspannraum als auch einer vorteilhaften kompakten Bauweise und um Platz zu sparen, ist der Antriebsmechanismus vorzugsweise in der Ebene des Maschinenbetts und damit unterhalb der Abstützelemente und Formaufspannplattenangeordnet. Dies gewährleistet eine freie Zugänglichkeit zum Formspannraum nicht nur beim Einbau der Spritzgießform sondern auch zyklisch bei der Teilefertigung.

Der wenigstens eine Antriebsmotor ist vorzugsweise sowohl zum Bewegen der beweglichen Formaufspannplatte als auch zum Öffnen und Schließen der Formschließeinheit bestimmt und geeignet ist. Damit sind für diese Bewegungen keine gesonderten, über eine Steuerung miteinander abzustimmende Antriebseinheiten erforderlich.

Vorzugsweise wird die Schließkraft über eine gesonderte Schließkrafterzeugungseinheit bei Formschluss der Spritzgießform aufgebracht, die vorzugsweise an der stationären Formaufspannplatte entkoppelt von dem wenigstens einen Antriebsmechanismus angebracht ist. Gesonderte Entkoppplungsmittel zur Entkopplung der Bewegungen verschiedener Antriebe können dadurch entfallen.

Vorzugsweise befindet sich der wenigstens eine Lastsensor in der Auflage der Kraftangriffspunkte und damit vorzugsweise unterhalb der Abstützelemente.

Vorteilhaft für eine Abbremsung der Bewegung und Verriegelung der Formaufspannplatten weist der Antriebsmechanismus wenigstens eine Bremse auf. Die Bremse kann aber auch nur als Halte-/ Feststellbremse oder Not-Stop-Bremse konzipiert sein.

Der Antriebsmechanismus weist vorzugsweise zwei, besonders bevorzugt vier Antriebsmotoren auf, die unabhängig voneinander jeweils einen Zahnstangenantrieb antreiben bzw. unabhängig voneinander in einen Zahnstangenantrieb eingreifen. Durch das separate Antreiben der beiden Zahnstangenantriebe ist es vorteilhaft möglich, Kippmomente insbesondere bei einer ungleichmäßigen Lastenverteilung der beweglichen Formaufspannplatte durch ein gezieltes Antreiben der entsprechenden Zahnstangenantriebe auszugleichen. Ferner ist es möglich, durch die Antriebe auf die Formparallelität der beweglichen Formaufspannplatte bzgl. der stationären Formaufspannplatte Einfluss zu nehmen.

Für einen vorteilhaften einfachen Aufbau weist der Antriebsmechanismus einen Antriebsmotor auf, welcher eine Welle antreibt, die in Wirkverbindung mit zwei Zahnstangenantrieben steht. Durch das Antreiben der Welle mit Hilfe einer entsprechenden Betätigung des Zahnstangenantriebs ist ein paralleler Antrieb gewährleistet.

Es ist von Vorteil, wenn die Zahnstangen unterhalb der Führung und vorzugsweise verdeckt von der Führung für die bewegliche Formaufspannplatte angeordnet sind, da bereits durch diese Anordnung eine Stabilisierung der Formaufspannplatte bei ihrer Bewegung als auch beim Spritzgießvorgang erfolgt. In einem weiter bevorzugten Ausführungsbeispiel kann diese Anordnung durch zusätzliche Einstellmittel zur weiteren Absicherung der Formaufspannplatte zusätzlich genutzt werden.

Vorzugsweise sind die Einstellmittel zum Einstellen der beweglichen Formaufspannplatte einerseits an der Führung und andererseits an der Zahnstange vorgesehen, um ein Festlegen möglichst nahe des Punktes der Krafteinleitung zu gewährleisten, um dadurch eine spielfreie Einstellung zwischen dem Führungs- und Antriebssystem zu erreichen.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine isometrische Ansicht der erfindungsgemäßen Formschließeinheit in geöffnetem Zustand von schräg oben,
- Fig. 2: Rückansicht der Formschließeinheit gemäß Fig. 1,
- Fig. 3a - 3c: Seitenansichten der Formschließeinheit gemäß Fig. 1 in verschiedenen Ausführungsbeispielen mit unterschiedlichen Antriebskonzepten,
- Fig. 4: Schnittdarstellung des Antriebsmechanismus im Bereich des Maschinenbetts mit zwei Antriebsmotoren entlang Linie B-B in Fig. 3a,
- Fig. 5a: Rückansicht der Formschließeinheit mit einem Antriebsmotor und einer Welle,
- Fig. 5b: eine Rückansicht gemäß Fig. 5a in einem weiteren Ausführungsbeispiel mit einem Doppelantrieb mit durchgängiger Welle.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

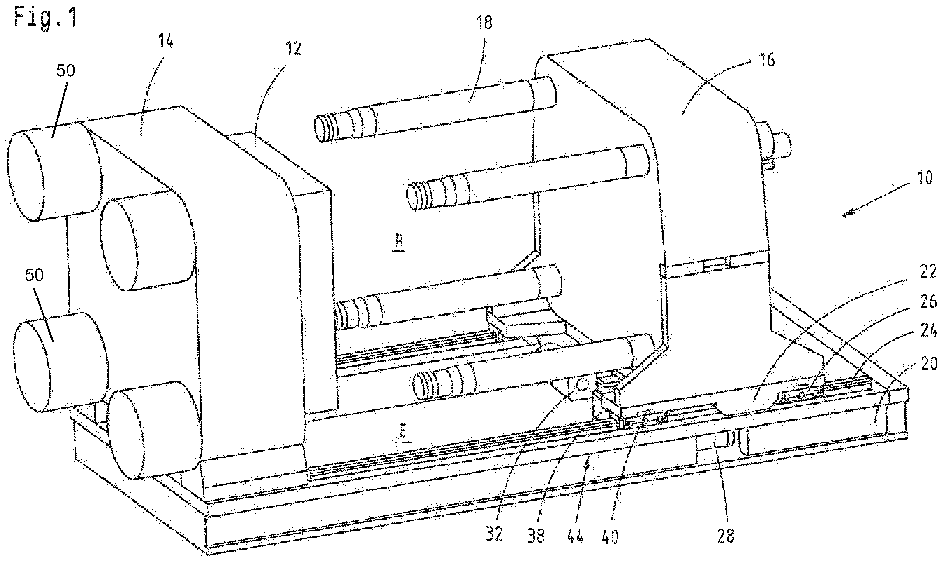

Fig. 1 zeigt schematisch eine perspektivische Ansicht einer Formschließeinheit 10 von schräg oben für eine Spritzgießmaschine zur Verarbeitung von Kunststoffen und anderen plastifizierbaren Massen wie keramischen oder pulverigen Massen mit einer stationären Formaufspannplatte 14, einer beweglichen Formaufspannplatte 16, welche mit der stationären Formaufspannplatte 14 einen Formspannraum R zur Aufnahme veränderlicher Spritzgießformen 12 definiert, die in Fig. 1 teilweise dargestellt ist.

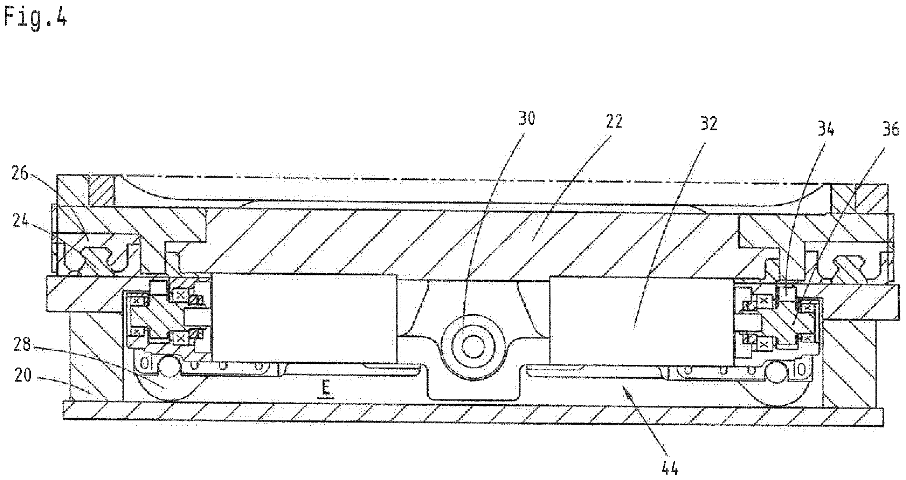

Die bewegliche Formaufspannplatte 16 ist auf einem Schlitten 22 mit Führungsschuhen 26 angebracht, welcher entlang wenigstens einer am Maschinenbett 20 angebrachten Führung 24 relativ zur stationären Formaufspannplatte 14 in und außer Formschluss einer im Formspannraum R anordenbaren Spritzgießform 12 bewegbar ist. Holme 18 durchgreifen die bewegliche Formaufspannplatte 16 und verriegeln im geschlossenen Zustand die Formschließeinheit 10 bzw. die stationäre Formaufspannplatte 14 mit der beweglichen Formaufspannplatte 16. Zum Bewegen der beweglichen Formaufspannplatte 16 und zum Öffnen/Schließen der Formschließeinheit 10 weist die Formschließeinheit 10 wenigstens einen Antriebsmechanismus 44 auf. Der Antriebsmechanismus 44 weist wenigstens einen von wenigstens einem Antriebsmotor 32 angetriebenen Zahnstangenantrieb 38 mit wenigstens einem Zahnrad 36 und wenigstens einer mit dem Zahnrad zusammenwirkenden Zahnstange 34 gemäß Fig. 4 auf.

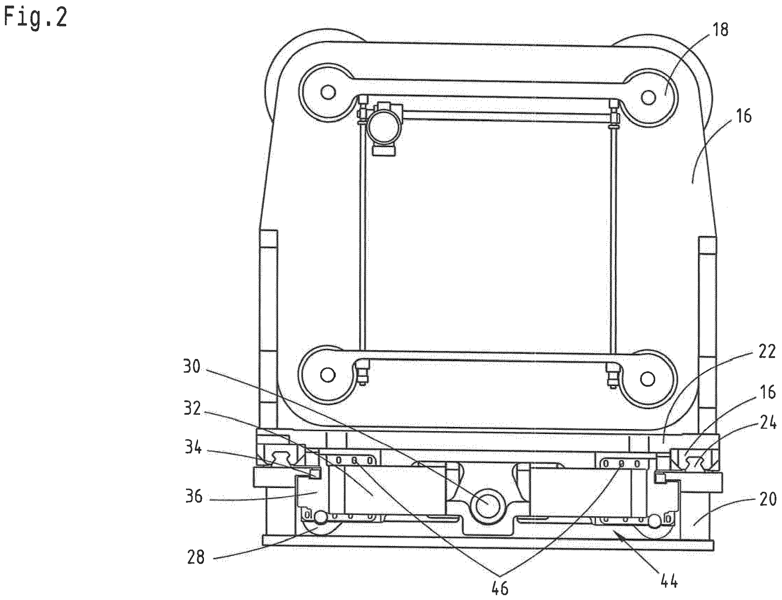

Gemäß der Rückansicht der Formschließeinheit in Fig. 2 sind wenigstens zwei Zahnstangen 34 fest mit dem Maschinenbett 20 verbunden. Der Antriebsmotor 32 ist fest mit dem Schlitten 22 verbunden. Bei einer Betätigung des Antriebsmechanismus 44 dreht der Antriebsmotor 32 das Zahnrad 36, welches in die Zahnstange 34 eingreift und so den Schlitten 22 bewegt. Bei einer Bewegung der beweglichen Formaufspannplatte 16 bewegt sich der Antriebsmotor 32 synchron mit der beweglichen Formaufspannplatte 16 in dieselbe Richtung. Der Antriebsmotor 32 fährt mit der beweglichen Formaufspannplatte 16 mit. Vorzugsweise ist eine gerade Anzahl an Zahnstangen 34 vorgesehen.

Vorteilhaft ist der Antriebsmechanismus 44 in der Ebene E des Maschinenbetts 20 und vorzugsweise unterhalb der Abstützelemente für die Formaufspannplatten angeordnet, so dass ein freier Zugang zum Formspannraum R vorgesehen ist. Damit sind die Zahnstangen 34 vorzugsweise hängend und innenliegend und damit vor Verschmutzung geschützt am Maschinenbett 20 angebracht.

Prinzipiell denkbar ist aber auch eine andere Anordnung des Antriebsmechanismus 44, beispielsweise seitlich oder oberhalb der Formaufspannplatten 14, 16. Die Zahnstange 34 könnte sich dann z.B. an der stationären Formaufspannplatte 14 abstützen.

Vorzugsweise ist der wenigstens eine Antriebsmotor 32 sowohl zum Bewegen der beweglichen Formaufspannplatte 16 als auch zum Öffnen und Schließen der Formschließeinheit 10 bestimmt und geeignet ist. Gesonderte Antriebe für diese Bewegungsabläufe sind nicht erforderlich.

Die beim Formschluss der Spritzgießform 12 und beim Einspritzen des plastifizierten Materials in den Formhohlraum aufzubringende Schließkraft wird vorzugsweise über eine gesonderte Schließkrafterzeugungseinheit 50 aufgebracht, die vorzugsweise an der stationären Formaufspannplatte 14 oder an einem anderen stationären Element der Maschine wie z.B. einer Abstützplatte für die Formschließeinheizt angebracht ist. Dadurch ist keine gesonderte Entkopplung der Formfahrbewegung und Schließkraftaufbringung erforderlich. Das Element zur Aufbringung der Schließkraft lässt sich damit jederzeit unmittelbar und ohne Zeitverlust betätigen, was die Zykluszeit der zyklisch arbeitenden Spritzgießmaschine verringert.

Fig. 2 zeigt auch, dass die Zahnstangen 34 unterhalb der Führung 24 und vorzugsweise verdeckt von der Führung 24 für die bewegliche Formaufspannplatte 16 angeordnet sind. Zur weiteren Stabilisierung können Einstellmittel 46, im Ausführungsbeispiel gebildet durch eine Langlochverstellung der Motor/Ritzelkombination, zum Einstellen der beweglichen Formaufspannplatte 16 einerseits an der Führung 24 und andererseits an der Zahnstange 34 vorgesehen sein, um dadurch eine spielfreie Einstellung zwischen dem Führungs- und Antriebssystem zu erreichen.

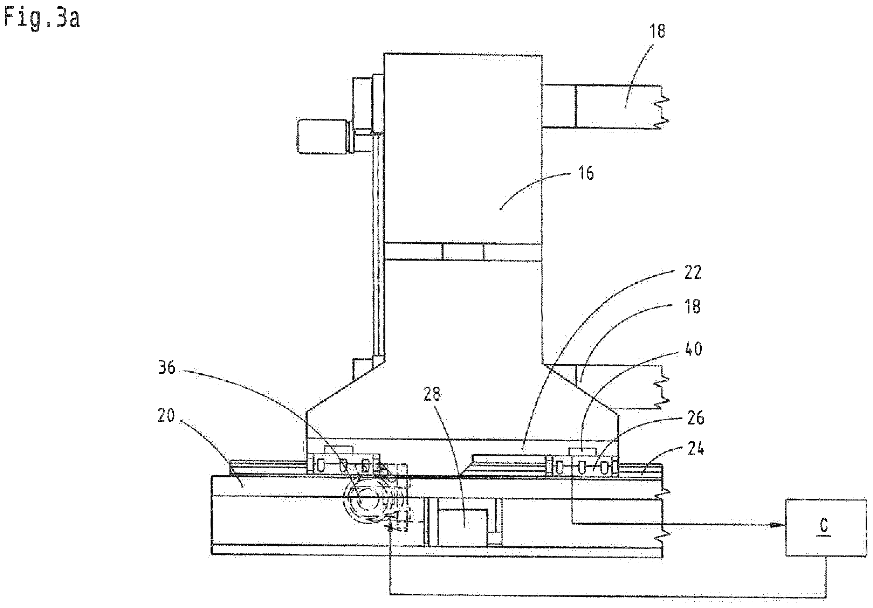

In einem weiteren Ausführungsbeispiel gemäß Fig. 3a sind am Schlitten 22 Lastsensoren 40 angebracht. Prinzipiell denkbar ist auch, dass Lastsensoren 40 direkt an der beweglichen Formaufspannplatte 16 angebracht sind, sowie eine Anbringung der Lastsensoren 40 am Schlitten 22 und der beweglichen Formaufspannplatte 16. Mit Hilfe der Lastsensoren 40 werden Kippkräfte bzgl. der beweglichen Formaufspannplatte 16 erfasst. Die Kippkräfte können zu einer Neigung der beweglichen Formaufspannplatte 16 in und/oder entgegen der Bewegungsrichtung nicht nur, aber auch aufgrund einer ungleichen Lastverteilung bei der Bewegung, insbesondere bei der Beschleunigung der beweglichen Formaufspannplatte 16, führen.

Durch Kenntnis der Lastverteilung werden die Kippkräfte vorzugsweise mit einer Regeleinheit C ausgeglichen. Dazu stehen die Lastsensoren 40 mit der wenigstens einen Regeleinheit C in Verbindung, welche den Antriebsmechanismus 44 je nach vorliegenden Kippkräften so regelt, dass eine kippfreie Bewegung der beweglichen Formaufspannplatte 16 und möglichst planparallele Bewegung der Formaufspannplatten zueinander gewährleistet werden kann. Mit Hilfe der Lastsensoren 40 werden auftretende Kippkräfte während des Betriebs der Spritzgießmaschine bzw. der beweglichen Formaufspannplatte 16 erfasst. Die Regeleinheit C regelt anschließend den Antriebsmechanismus 44 je nach erfassten Kippkräften so, dass die Kippkräfte durch Beschleunigen oder Abbremsen der beweglichen Formaufspannplatte 16 ausgeglichen werden. Beispielsweise kann die Regeleinheit C bei Vorliegen einer Kippkraft in Bewegungsrichtung der beweglichen Formaufspannplatte 16 über den Antriebsmechanismus 44 die Geschwindigkeit der Zahnradantriebe 38 kurzzeitig erhöhen, um ein "Umkippen" der beweglichen Formaufspannplatte 16 abzufangen und auszugleichen. Werden vier Antriebe vorgesehen, lässt sich die bewegliche Formaufspannplatte 16 eingespannt fahren bzw. bewegen, d.h. sie ist von ihren Freiheitsgraden her bestimmt.

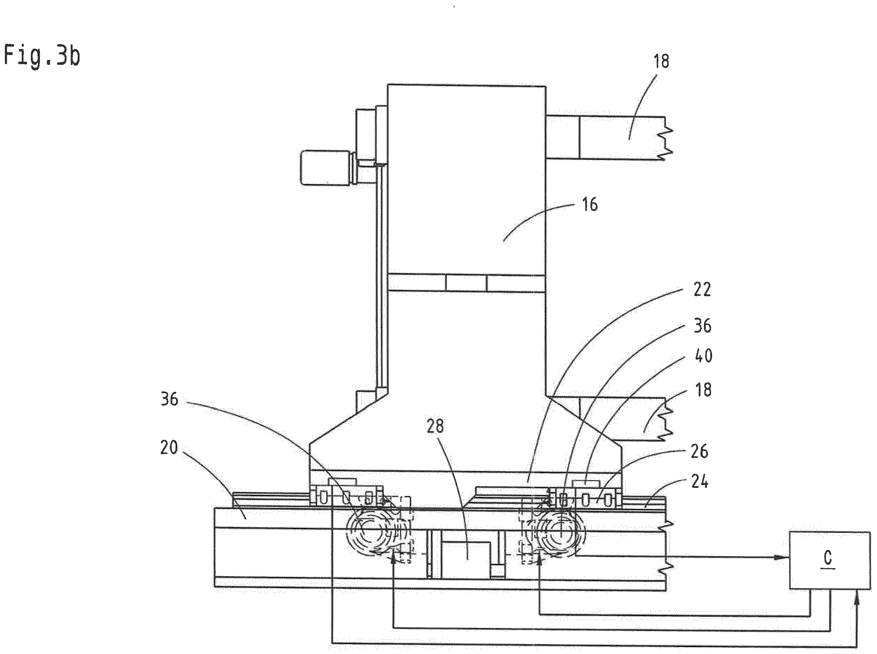

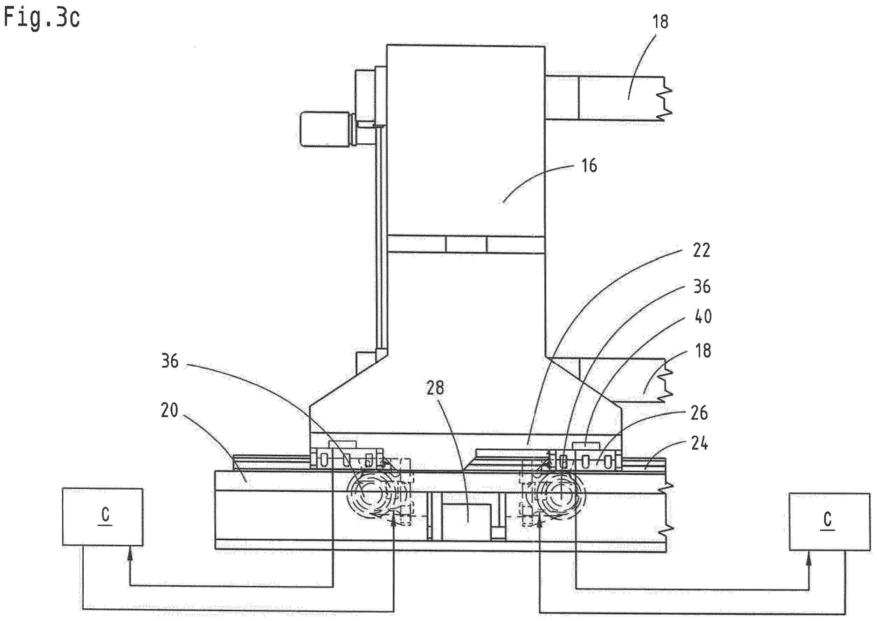

Fig. 3b und Fig. 3c zeigen alternative Antriebskonzepte. Während in Fig. 3b mehrere Antriebe von einer Regeleinheit C geregelt werden, zeigt Fig. 3c eine Lösung, bei der jeder Antrieb von einer eigenen Regeleinheit C geregelt wird. Es handelt sich damit um eine unabhängige Ansteuerung und die Regeleinheiten können miteinander zur Lösung der Aufgabe der Stabilisierung der Formaufspannplatte 16 kommunizieren.

Fig. 4 ist eine Schnittdarstellung des Antriebsmechanismus 44 im Bereich des Maschinenbetts 20 entlang der in Fig. 3a gezeigten Schnittebene B-B. Um die bewegliche Formaufspannplatte 16 abzubremsen, weist der Antriebsmechanismus 44 wenigstens eine Bremse vorzugsweise als Haltebremse oder Not-Stop-Bremse auf. In Fig. 4 weist der Antriebsmechanismus 44 vorzugsweise eine Bremse 30 auf, welche mittig zwischen den Antriebsmotoren 32 angebracht ist. Alternativ oder auch ergänzend kann eine weitere Bremse 28 vorgesehen sein. Alle Bremsen können ja nach Ort und Ausgestaltung als Reibungsbremsen oder als Feststellbremsen ausgebildet sein. Die Bremsen 30 und 28 übernehmen grds. die gleiche Funktion (Not-Stopp oder Haltebremse), wobei lediglich alternative Positionierungen dargestellt wurden. Denkbar ist beispielsweise auch eine hydraulische Bremse. Links und rechts neben den Antriebsmotoren 32 ist alternativ oder ergänzend zur Bremse 30 jeweils eine weitere Bremse 28 vorgesehen, welche jeweils einem Zahnstangenantrieb 38 zugeordnet ist. Weiterhin können die Bremsen 28, 30 die Zahnstangenantriebe 38 so sichern, dass sich die bewegliche Formaufspannplatte 16 nicht mehr bewegen lässt. Im Ausführungsbeispiel lässt sich mindestens eine oder eine Kombination von bis zu sechs Bremsen umsetzen (maximal 2 Bremsen in der Mitte (Pos 30) und jeweils eine rechts und links (Pos 28) und/oder zwei Bremsen jeweils rechts und links (Pos28).

In Fig. 3a und 4 weist der Antriebsmechanismus 44 zwei Antriebsmotoren 32 auf, die jeweils einem Zahnstangenantrieb 38 zugeordnet sind. Die Antriebsmotoren 32 sind vorzugsweise links und rechts von der Bremse 30 angeordnet und treiben jeweils ein Zahnrad 36 an, welche in die Zahnstangen 34 eingreifen und so den Schlitten 22 bewegen. Die Antriebsmotoren 32 können synchron die Zahnstangenantriebe 38 antreiben oder auch einzeln unabhängig voneinander arbeiten. Beispielsweise ist es möglich, bei einer Verkippung der beweglichen Formaufspannplatte 16 in ihrer Bewegungsrichtung beide Antriebsmotoren 32 gleichzeitig synchron zu betätigen, um so die Verkippung auszugleichen. Ferner ist es bei einer seitlichen Rechts-Links-Verkippung der beweglichen Formaufspannplatte 16 möglich, den rechten bzw. linken Zahnstangenantrieb 38 einzeln zu betätigen und so die Parallelität der beweglichen Formaufspannplatte 16 bzgl. der stationären Formaufspannplatte 14 wiederherzustellen.

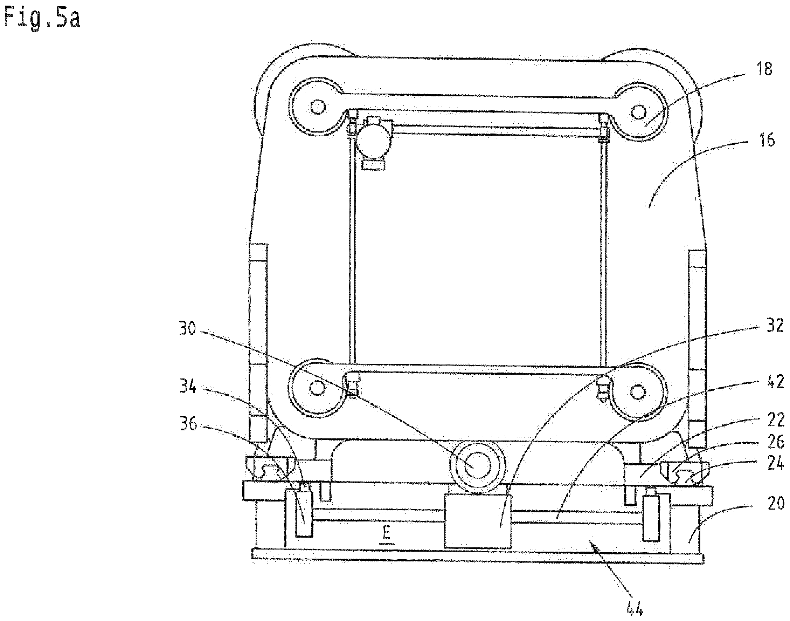

In einem weiteren bevorzugten Ausführungsbeispiel gemäß Fig. 5a weist der Antriebsmechanismus 44 einen Antriebsmotor 32 auf, welcher über eine Welle 42 die beiden Zahnstangenantriebe 38 über die Zahnräder 36 antreibt. Dadurch ist ein paralleler Antrieb der beweglichen Aufspannplatte 16 gewährleistet. Fig. 5a zeigt auch eine mittig angeordnete Bremse 30.

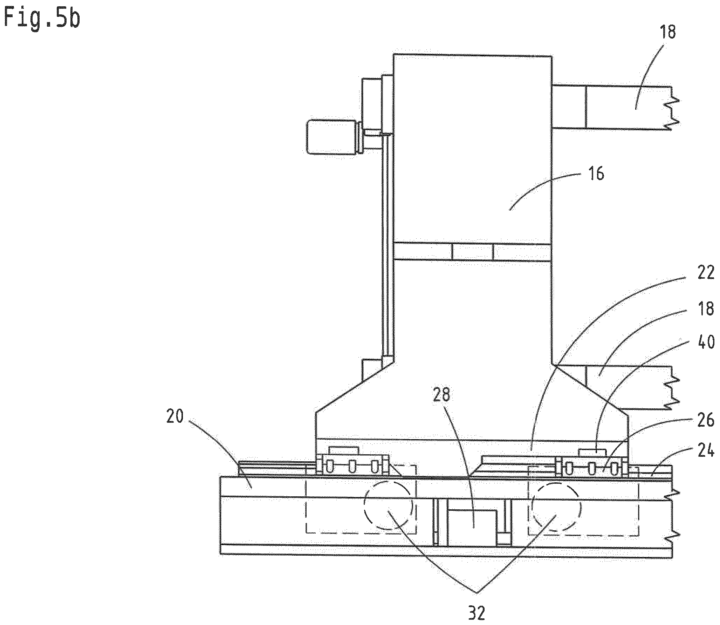

Bei einer Verkippung der beweglichen Formaufspannplatte 16 in Bewegungsrichtung der beweglichen Formaufspannplatte 16 ist es möglich, durch Betätigung der Zahnstangenantriebe 38 die Verkippung auszugleichen und die bewegliche Formaufspannplatte 16 in Parallelität mit der stationären Formaufspannplatte 14 zu bringen. Dazu ist in Fig. 5b ein doppelter Antrieb 32 mit einer durchgängigen Welle 42 zum Antrieb von zwei Zahnrädern 36 vorgesehen.

Grundsätzlich kann damit ein Motor z.B. mit zwei Zahnrädern 36, die mit einer durchgehenden Welle 42 verbunden sind, in zwei Zahnstangen eingreifen (Fig. 5a). Dies ist auch mit mehreren Motoren gemäß Fig. 5b möglich. Ebenso können gemäß den Fig. 3b und 3c mehrere, z.B. vier Motoren, denen jeweils ein vom Motor angetriebenes Zahnrad zugeordnet ist, zum Antrieb in zwei Zahnstangen eingreifen.

### Bezugszeichenliste

- 10: Formschließeinheit
- 12: Spritzgießform
- 14: stationäre Formaufspannplatte
- 16: bewegliche Formaufspannplatte
- 18: Holm
- 20: Maschinenbett
- 22: Schlitten
- 24: Führung
- 26: Führungsschuh
- 28: weitere Bremse
- 30: Bremse
- 32: Antriebsmotor
- 34: Zahnstange
- 36: Zahnrad
- 38: Zahnstangenantrieb
- 40: Lastsensor
- 42: Welle
- 44: Antriebsmechanismus
- 46: Einstellmittel
- 50: Schließkrafterzeugungseinheit
- C: Regeleinheit
- E: Ebene
- R: Formaufspannraum

## Patentansprüche

1. Formschließeinheit (10) für eine Spritzgießmaschine zur Verarbeitung von Kunststoffen und anderen plastifizierbaren Massen wie keramischen und pulverförmigen Massen, mit
- wenigstens einem Maschinenbett (20),
- wenigstens einer auf dem Maschinenbett angeordneten stationären Formaufspannplatte (14),
- wenigstens einer gegenüber der stationären Formaufspannplatte (14) auf dem Maschinenbett beweglich angeordneten Formaufspannplatte (16), wobei die bewegliche Formaufspannplatte (16) auf einem Schlitten (22) mit Führungsschuhen (26) entlang wenigstens einer am Maschinenbett (20) angebrachten Führung (24) mit der stationären Formaufspannplatte (14) in und außer Formschluss einer in einem Formspannraum (R) anordenbaren Spritzgießform (12) bewegbar ist,
- wenigstens einem Antriebsmechanismus (44) zum Bewegen der beweglichen Formaufspannplatte (16) und zum Öffnen/Schließen der Formschließeinheit (10), wobei der Antriebsmechanismus (44) wenigstens einen von wenigstens einem Antriebsmotor (32) angetriebenen Zahnstangenantrieb (38) mit wenigstens einem Zahnrad (36) und wenigstens einer damit zusammenwirkenden Zahnstange (34) aufweist,
- wobei wenigstens zwei Zahnstangen (34) fest mit dem Maschinenbett (20) verbunden sind und
- wobei der Antriebsmotor (32) fest mit dem Schlitten (22) verbunden ist und sich bei einer Bewegung der beweglichen Formaufspannplatte (16) synchron mit der beweglichen Formaufspannplatte (16) in dieselbe Richtung bewegt,
**dadurch gekennzeichnet, dass** der Schlitten (22) wenigstens einen Lastsensor (40) zur Erfassung von Kippkräften aufweist, der mit wenigstens einer Regeleinheit (C) in Verbindung steht, die dazu eingerichtet ist, den Antriebsmechanismus (44) je nach Kippkraft zu regeln.

2. Formschließeinheit nach Anspruch 1, **dadurch gekennzeichnet, dass** der Antriebsmechanismus (44) in der Ebene (E) des Maschinenbetts (20) angeordnet ist.

3. Formschließeinheit nach Anspruch 1 oder 2, **dadurch gekennzeichnet, dass** der wenigstens eine Antriebsmotor (32) sowohl zum Bewegen der beweglichen Formaufspannplatte (16) als auch zum Öffnen und Schließen der Formschließeinheit (10) bestimmt und geeignet ist.

4. Formschließeinheit nach einem der vorhergehenden Ansprüche, **dadurch gekennzeichnet, dass** eine Schließkrafterzeugungseinheit (50) zur Aufbringung der Schließkraft bei Formschluss der Spritzgießform (12) vorgesehen ist, die vorzugsweise an der stationären Formaufspannplatte (14) entkoppelt von dem wenigstens einen Antriebsmechanismus (44) angebracht ist.

5. Formschließeinheit nach Anspruch 1, **dadurch gekennzeichnet, dass** der wenigstens eine Lastsensor (40) in der Auflage der Kraftangriffspunkte der beweglichen Formaufspannplatte (16) angeordnet ist.

6. Formschließeinheit nach einem der vorhergehenden Ansprüche, **dadurch gekennzeichnet, dass** der Antriebsmechanismus (44) wenigstens eine Bremse (28, 30) aufweist.

7. Formschließeinheit nach einem der vorhergehenden Ansprüche, **dadurch gekennzeichnet, dass** der Antriebsmechanismus (44) wenigstens zwei, vorzugsweise vier Antriebsmotoren (32) aufweist, die unabhängig voneinander in einen Zahnstangenantrieb (38) eingreifen.

8. Formschließeinheit nach einem der Ansprüche 1 bis 6, **dadurch gekennzeichnet, dass** der Antriebsmechanismus (44) wenigstens einen Antriebsmotor (32) aufweist, welcher wenigstens eine Welle (42) antreibt, die in Wirkverbindung mit den wenigstens zwei Zahnstangenantrieben (38) steht.

9. Formschließeinheit nach einem der vorhergehenden Ansprüche, **dadurch gekennzeichnet, dass** die Zahnstangen (34) unterhalb der Führung (24) und vorzugsweise verdeckt von der Führung (24) für die bewegliche Formaufspannplatte (16) angeordnet sind.

10. Formschließeinheit nach Anspruch 9, **dadurch gekennzeichnet, dass** Einstellmittel (46) zum Einstellen der beweglichen Formaufspannplatte einerseits an der Führung (24) und andererseits an der Zahnstange (34) vorgesehen sind.

## Claims

1. Mould closing unit (10) for an injection moulding machine for processing plastics materials and other plasticisable materials such as ceramics and powdered materials, comprising
- at least one machine bed (20),
- at least one stationary mould mounting plate (14) arranged on the machine bed,
- at least one mould mounting plate (16) arranged on the machine bed movable relative to the stationary mould mounting plate (14), wherein the movable mould mounting plate (16) is movable on a carriage (22) with guideway shoes (26) along at least one guideway (24) that is mounted on the machine bed (20) with the stationary mould mounting plate (14) into and out of closure of an injection mould (12) arrangeable in a mould clamping space (R),
- at least one drive mechanism (44) for moving the movable mould mounting plate (16) and for opening/closing the mould closing unit (10), wherein the drive mechanism (44) has at least one toothed rack drive (38) driven by at least one drive motor (32) with at least one gearwheel (36) and at least one toothed rack (34) cooperating therewith,
- wherein at least two toothed racks (34) are fixedly connected to the machine bed (20) and
- wherein the drive motor (32) is fixedly connected to the carriage (22) and during a movement of the movable mould mounting plate (16) moves synchronously with the movable mould mounting plate (16) in the same direction,
**characterised in that** the carriage (22) comprises at least one load sensor (40) for detecting tilting forces, which at least one load sensor (40) is connected to at least one regulating unit (C), which is adapted to regulate the drive mechanism (44) according to the tilting force.

2. Mould closing unit according to claim 1, **characterised in that** the drive mechanism (44) is arranged in the plane (E) of the machine bed (20).

3. Mould closing unit according to claim 1 or 2, **characterised in that** the at least one drive motor (32) is intended and suitable both for moving the movable mould mounting plate (16) and also for opening and closing the mould closing unit (10).

4. Mould closing unit according to one of the preceding claims, **characterised in that**, for applying the closing force on closure of the injection mould (12), there is provided a closing force generating unit (50), which is preferably mounted on the stationary mould mounting plate (14), decoupled from the at least one drive mechanism (44).

5. Mould closing unit according to claim 1, **characterised in that** the at least one load sensor (40) is arranged in the support of the force application points of the movable mould mounting plate (16).

6. Mould closing unit according to one of the preceding claims, **characterised in that** the drive mechanism (44) comprises at least one brake (28, 30).

7. Mould closing unit according to one of the preceding claims, **characterised in that** the drive mechanism (44) comprises at least two, preferably four, drive motors (32) which engage independently of one another in a toothed rack drive (38).

8. Mould closing unit according to one of the claims 1 to 6, **characterised in that** the drive mechanism (44) comprises at least one drive motor (32) which drives at least one shaft (42), which is in operative connection with the at least two toothed rack drives (38).

9. Mould closing unit according to one of the preceding claims, **characterised in that** the toothed racks (34) are arranged beneath the guideway (24) and preferably covered by the guideway (24) for the movable mould mounting plate (16).

10. Mould closing unit according to claim 9, **characterised in that** adjusting means (46) are provided for adjusting the movable mould mounting plate, on one hand, on the guideway (24) and, on the other hand, on the toothed rack (34).

## Revendications

1. Unité de fermeture de moule (10) pour une machine de moulage par injection pour la fabrication de matières plastiques et d'autres masses plastifiables comme des masses céramiques et pulvérulentes, comportant
- au moins un banc de machine (20),
- au moins une plaque de serrage de moule stationnaire (14) disposée sur le banc de machine,
- au moins une plaque de serrage de moule (16) disposée de manière mobile sur le banc de machine, en face de la plaque de serrage de moule stationnaire (14), la plaque de serrage mobile (16) étant déplaçable sur un chariot (22) avec des sabots de guidage (26) le long d'au moins un guidage (24) fixé sur le banc de machine (20) avec la plaque de serrage de moule stationnaire (14) pendant et hors fermeture d'un moule de moulage par injection (12) pouvant être disposé dans une zone de serrage de moule (R),
- au moins un mécanisme d'entraînement (44) pour déplacer la plaque de serrage de moule mobile (16) et pour l'ouverture/fermeture de l'unité de fermeture de moule (10), le mécanisme d'entraînement (44) présentant un entraînement à crémaillère (38) entraîné par au moins un moteur d'entraînement (32) et ayant au moins une roue dentée (36) et au moins une crémaillère (34) coopérant avec elle,
- dans lequel au moins deux crémaillères (34) sont reliées fermement avec le banc de machine (20) et
- dans lequel le moteur d'entraînement (32) est relié fermement avec le chariot (22) et se déplace lors d'un déplacement de la plaque de serrage de moule mobile (16) en synchronisation avec la plaque de serrage de moule mobile (16) dans la même direction,
**caractérisé en ce que** le chariot (22) comprend au moins un détecteur de charge (40) pour détecter des forces de basculement, lequel détecteur est en liaison avec au moins une unité de réglage (C) qui est équipée pour régler le mécanisme d'entraînement (44) en fonction de la force de basculement.

2. Unité de fermeture de moule selon la revendication 1, **caractérisée en ce que** le mécanisme d'entraînement (44) est disposé dans le plan (E) du banc de machine (20).

3. Unité de fermeture de moule selon la revendication 1 ou 2, **caractérisée en ce que** le ou les moteur(s) d'entraînement (32) est/sont prévu(s) et approprié(s) tant pour le déplacement de la plaque de serrage de moule mobile (16) que pour l'ouverture et la fermeture de l'unité de fermeture de moule (10).

4. Unité de fermeture de moule selon l'une des revendications précédentes, **caractérisé en ce qu'**une unité de production de force de fermeture (50) est prévue pour l'application de la force de fermeture lors de la fermeture du moule de moulage par injection (12), laquelle unité de production est fixée de préférence sur la plaque de serrage stationnaire (14) de manière découplée du ou des mécanisme(s) d'entraînement (44).

5. Unité de fermeture de moule selon la revendication 1, **caractérisée en ce que** le ou les détecteur(s) de charge (40) est/sont disposé(s) sur la surface d'appui des points d'application de force de la plaque de serrage de moule mobile (16).

6. Unité de fermeture de moule selon l'une des revendications précédentes, **caractérisée en ce que** le mécanisme d'entraînement (44) présente au moins un frein (28,30).

7. Unité de fermeture de moule selon l'une des revendications précédentes, **caractérisé en ce que** le mécanisme d'entraînement (44) comprend au moins deux, de préférence quatre moteurs d'entraînement (32), qui interviennent indépendamment les uns des autres dans un entraînement à crémaillère (38).

8. Unité de fermeture de moule selon l'une des revendications 1 à 6, **caractérisée en ce que** le mécanisme d'entraînement (44) comprend au moins un moteur d'entraînement (32) qui entraîne au moins un arbre (42), lequel est en liaison de travail avec les deux ou plus entraînements à crémaillère (38).

9. Unité de fermeture de moule selon l'une des revendications précédentes, **caractérisé en ce que** les crémaillères (34) sont disposées sous le guidage (24) et de préférence cachées par le guidage (24), pour la plaque de serrage de moule mobile (16).

10. Unité de fermeture de moule selon la revendication 9, **caractérisée en ce que** des moyens de réglage (46) pour régler la plaque de serrage de moule mobile sont prévus d'une part sur le guidage (24) et d'autre part sur la crémaillère (34).
